Europäisches Patentamt

European Patent Office

Office européen des brevets

(19)

(11) Publication number: **0 386 847**
**A2**

## (12) EUROPEAN PATENT APPLICATION

(21) Application number: **90200521.4**

(22) Date of filing: **06.03.90**

(51) Int. Cl.5: **F16H 21/30, B62M 1/02**

(30) Priority: **08.03.89 JP 55606/89**
**21.07.89 JP 189797/89**

(43) Date of publication of application:
**12.09.90 Bulletin 90/37**

(84) Designated Contracting States:
**DE ES FR GB IT NL**

(71) Applicant: **Nishiyama, Osamu**
**3-9, Nagate-cho 5-chome, Nada-ku**
**Kobe-shi, Hyogo-ken(JP)**

(72) Inventor: **Nishiyama, Osamu**
**3-9, Nagate-cho 5-chome, Nada-ku**
**Kobe-shi, Hyogo-ken(JP)**

(74) Representative: **Voncken, Bartholomeus Maria**
**Christiaan et al**
**Octrooibureau Los en Stigter B.V. P.O. Box**
**20052**
**NL-1000 HB Amsterdam(NL)**

(54) **Crank mechanism.**

(57) A crank mechanism utilized for a bicycle or a combustion engine or the like, in which a planetary shaft (3) is provided at the utmost end of a crank arm (7) and an arm is fixed to the planetary shaft, so that when the utmost end of the arm is subjected to a force, the crank shaft in association with the arm is given a torque, the arm being provided, for example, horizontally so as to rotate the crank shaft while moving in parallel keeping the posture of the arm, whereby such a moving arm applies a torque to the crank arm even at the dead point and torque and total torque both become larger.

FIG. 4

EP 0 386 847 A2

## CRANK MECHANISM

FIELD OF THE INVENTION

The present invention relates to a crank mechanism used for a bicycle, a combustion engine and the like.

BACKGROUND OF THE INVENTION

A crank mechanism used for a bicycle or a combustion engine can geneate the maximum torque when a crank arm at a bicycle pedal or a crank pin at the combustion engine is horizontally positioned. The crank mechanism, however, has an upper dead point and a lower dead point not in connection with the torque, so that torque efficiency deteriorates as an angle of crank approaches the dead points.

SUMMARY OF THE INVENTION

In the light of the above problem, the present invention has been designed. An object thereof is to provide a crank mechanism which can obtain the torque even at the upper or lower dead point and a larger torque than the conventional one as well as the total torque at any angle of the crank arm.

In order to attain the above object, the crank mechanism of the present invention includes a main body, a crank shaft rotatably supported thereto, a crank arm rotatable around the crank shaft and integrally therewith, a planetary shaft supported to the utmost end of the crank arm perpendicularly and rotatably therto, an arm fixed to the planetary shaft perpendicularly thereto, and means for moving in parallel the arm rotatable together with the crank shaft when the utmost end of the arm is subjected to a force.

Such construction can obtain a torque equal to the product of a length of the arm and a force applied thereto even at the dead point of the crank, thereby enabling the crank to be efficiently operated. Accordingly, the crank mechanism of the invention, when in use for the bicycle, it can travel at high speed, and when used for the combustion engine, can obtain rotational energy more efficient than the well-known crank mechanism even at both strokes of explosion stroke and compression stroke, thereby expecting an extreme improvement is the aspect of a fuel expense.

BRIEF DESCRIPTION OF THE DRAWINGS

Figs. 1A through 1D show movement of a crank arm at the well-known crank mechanism,

Figs. 2A through 2D show relative movement of a crank arm at a crank mechanism of the invention and an arm extending from the crank arm,

Fig. 3 shows the principle of a first embodiment of a crank mechanism for a bicycle,

Fig. 4 is a partially cutaway perspective view of the crank mechanism of the bicycle,

Fig. 5 is front view exemplary of concrete structure thereof,

Fig. 6 is a sectional view in a plan of the crank mechanism in Fig. 5,

Fig. 7 shows the principle of a second embodiment of a crank mechanism of the invention for a combustion engine,

Fig. 8 is a partially cutaway perspective view of the principal portion of the crank mechanism of the combustion engine,

Fig. 9 is a chart of torque by polar coordinates regarding the crank mechanism for the combustion engine,

Fig. 10 is an exploded perspective view of the principal portion of a third embodiment of the crank mechanism of the invention using a linkage mechanism, and

Figs. 11A through 11F and 12A through 12F show operation of the linkage mechanism of the crank mechanism.

DETAILED DESCRIPTION OF THE PREFERRED EMBODIMENTS

Prior to description of the embodiment of the invention, the well-known crank mechanism will be simply described.

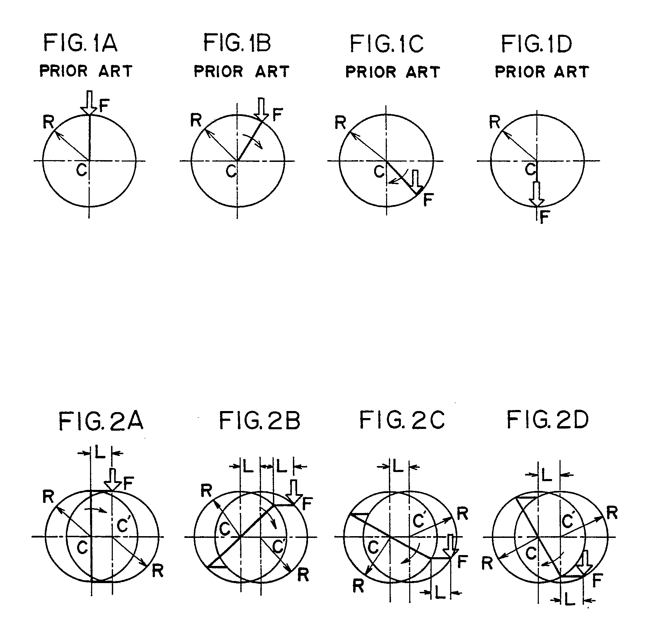

Referring to Figs. 1A through 1D, operation of the crank mechanism is described, in which reference letter F designates the position of a pedal (crank pins) and the direction of a force and the positional relation to rotate a crank shaft C, R designates a length of a crank arm, and CF designates the crank arm.

In such well-known construction, F is positioned at the upper dead point and lower dead point in Figs. 1A through 1D, in which the force F is not related to a torque, thereby largely deteriorating the torque efficiency.

Next, the present invention will be detailed as follows:

Figs. 2A through 2D show the principle of the present invention.

As shown in the drawings, a plurality of arms each of length L project horizontally from the utmost end of the crank arm and a force F is applied to the utmost end of one arm, so that the arm is rotated together with the crank arm while keep the horizontal posture. Then, the arm moves as shown in Figs. 2A through 2D and the utmost end of arm moves on a circle of a temporary center C' horizontally shifted by L from the crank shaft C' and of a radius R equal to that of the circle of path of the utmost end of crank arm.

Fig. 2A corresponds to Fig. 1A. Although no torque is therein, in Fig. 2A a torque L x F is generated. Also, as shown in Fig. 2D, even when the utmost end of crank arm at the opposite end is positioned at the upper dead point, that at the lower side possesses a torque of a product of F and a distance 2L from F to the vertical line passing C, whereby the torque is not at all lost.

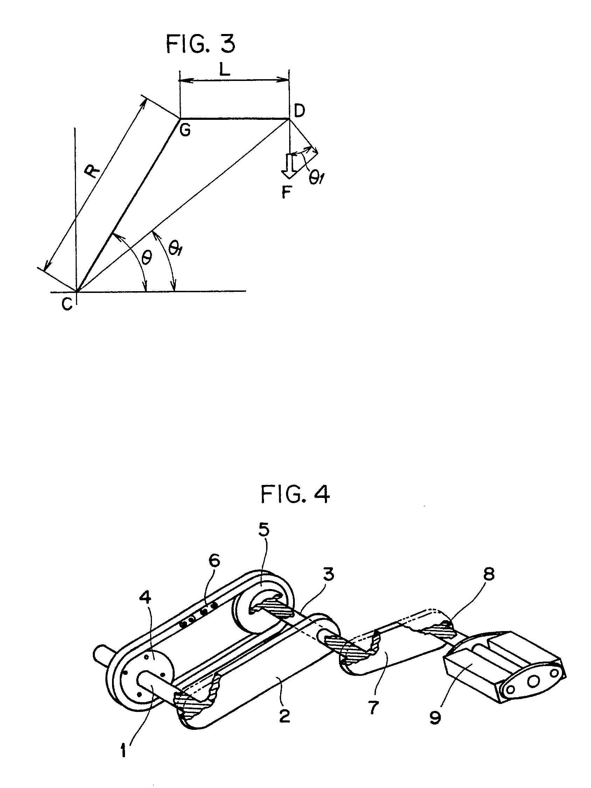

Referring to Fig. 3, reference letter C designates a crank shaft, G designates a planetary shaft, and D designates a pedal. The planetary shaft G is connected to the crank shaft C through a crank arm CG of length R, the pedal shaft D being connected to the planetary shaft G through an arm GD of length L and always moving in parallel (in the drawing, moving while keeping the horizontal posture), F designates a treading force for the pedal shaft D, $\theta$ designates an angle between the crank arm CG and the horizontal plane, and $\theta_1$ designates an angle between a line connecting the crank shaft C and pedal shaft D and the horizontal plane.

In this case, when a torque intended to rotate the pedal shaft D with respect to the crank shaft C is represented by MN, the following expression is given:

$$MN = CD \times F \cos \theta_1$$
$$= CD \times F (L + F \cos \theta)/CD$$
$$= F (L + R \cos \theta).$$

In the well-known example in Figs. 1A through 1C, L = 0 in the above expression. Accordingly, when $\theta = \pm \pi/2$, $\cos \theta = 0$ is given, this point is the dead point.

In this embodiment, when a variable $\theta$ is $\pm \pi/2$ at the dead point, MN leaves a valve FL even for R cos $\theta$ = 0 and is not zero. Moreover, at any angle, the torque component of FL extra exists in comparison with the conventional one. Therefore, torque between $+\pi/2$ and $-\pi/2$ is integrated to obtain the total torque as follows:

$$\Sigma MN = 2F \int_0^{\pi/2} (L + R \cos \theta) d\theta$$
$$= 2F \{ \int_0^{\pi/2} L d\theta + \int_0^{\pi/2} R \cos \theta d\theta \}$$
$$= 2F \{ L [\theta]_0^{\pi/2} + R [\sin\theta]_0^{\pi/2} \}$$
$$= 2F \{ L \cdot \pi/2 + R \sin\pi/2 \}$$
$$= \pi LF + 2RF \qquad (1)$$

Torque of the well-known crank mechanism is 2RF in the state where the 1st term is L = 0. Hence, in this embodiment, it is seen that torque is larger than the well-known crank mechanism only by $\pi$LF.

The above expression, when compared with a concrete computation example, is solved as follows: When torque of the well-known crank mechanism is represented by MP, that of the embodiment of the present invention by MN, and R = 20cm, L = 10cm and F = 30kg-f are substituted into the expression (1), the following values are obtained: $\Sigma MP = 2 \times 20 \times 30 = 1200$kg-cm

$\Sigma MN = \pi \times 10 \times 30 + 2 \times 20 \times 30 = 2142.5$ kg-cm

$\Sigma MN / \Sigma MP = 1.785$.

Namely, an increase is 78.5%.

Next, an example of construction of a crank mechanism of a bicycle will be described in Fig. 4. Fig. 4 is a partially cutaway perspective view of a right-hand pedal at the bicycle in the state where the force F is applied to the pedal in the first quadrant in Fig. 2B. At this time, the left-hand pedal is not shown of its position, but positioned in the third quadrant. In Fig. 4, reference numeral 1 designates a rotatable crank shaft (corresponding to C in Fig. 3), a crank arm 2 (corresponding to CG in Fig. 3) fixed to the crank shaft 1 and extending perpendicularly thereto supports at the utmost end a planetary shaft 3 (correponding to G in Fig. 3) in relation of being parallel to the crank shaft 1 and rotatable, 4 designates a sprocket fixed to the bicycle body so as to coaxially and rotatably support the crank shaft 1, and 5 designates a rotary sprocket of the same shape as the fixed sprocket 4 and coaxially fixed to the planetary shaft 3, so that a chain 6 is stretched across the fixed sprocket 4 and rotary sprocket 5. Alternatively, the chain 6 may be replaced by a toothed belt. At the planetary shaft 3 is provided an arm 7 (corresponding to GD in FIG. 3) which is fixed thereto and extends perpendicularly to the same. In the state where the chain 6 is stretched across the fixed sprocket 4 and rotary sprocket 5, the arm 7 maintains its parallel posture, for example, the horizontal posture during the moving in association with the crank arm 2. At the utmost end of arm 7 is fixed a pedal shaft 8 (corresponding to D is Fig. 3) in parallel to the planetary shaft 3, and a pedal 9 is rotatably mounted to the pedal shaft 8.

Now, when a cyclist treads the pedal 9 downwardly, the pedal shaft 8 is pushed downwardly, and the arm 7 moves downwardly while keeping its horizontal posture by the fixed and rotary sprockets 4 and 5 and chain 6. Hence, the crank arm 2 is pushed by the planetary shaft 3 to rotate around the crank shaft 1.

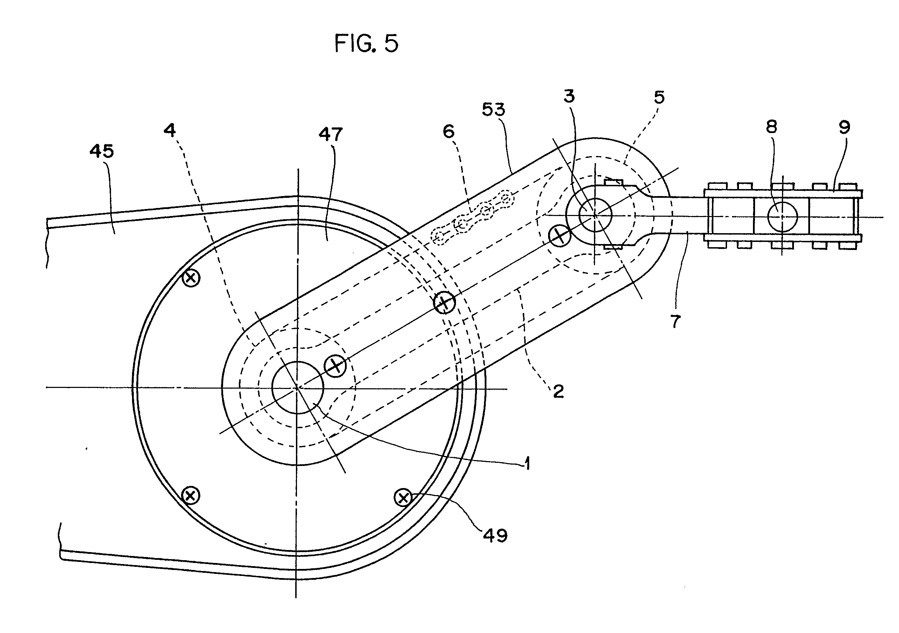

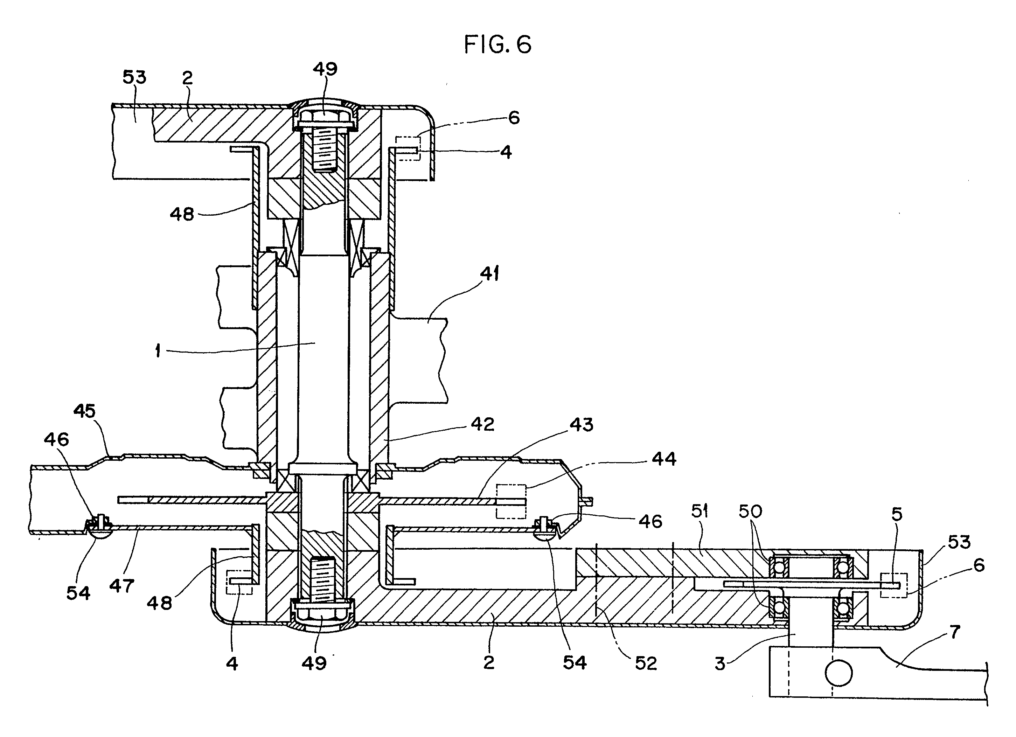

Referring to Figs. 5 and 6, an example of detailed construction of the crank mechanism for the bicycle is shown, in which a crank mechanism obtained by merely somewhat altering the bicycle is shown.

In these drawings, reference numeral 41 designates a bicycle frame and a bearing 42 rotatably supports a crank shaft 1. A sprocket 43 is spline-coupled with the crank shaft 1 at the right side of the bicycle and a driving force is transferred to a rear wheel (not shown) at the bicycle by a chain 44 engaging with the sprocket 43. Reference numeral 45 designates a chain cover. A cover lid is essentially mounted on the chain cover 45 at the position corresponding to the sprocket 43, and 46 designates a mounting seat for the cover lid. To the mounting seat 46 is fixed a lid plate 47 in place of the cover lid by a screw 54 and a cylinder 48 coaxial with the crank shaft 1 is mounted to the lid plate 47, the fixed sprocket 4 being mounted to the cylinder 48. A crank arm 2 spline-coupled with the crank shaft 1 is fixed by a bolt 49 to the end of crank shaft 1 within the cylinder 48, resulting in that the crank shaft 1, sprocket 43 and crank arm 2 are integrally rotatable. A planetary shaft 3, on which a rotary sprocket 5 is integrally rotatably mounted, is rotatably supported to the utmost end of crank arm 2 by bearings 50. A bearing holder 51 is mounted to the crank arm 2 by a bolt 52. A chain 6 is stretched across the fixed sprocket 4 and rotary sprocket 5 and a chain cover 53 is mounted on the crank arm 2 and an arm 7 is mounted on part of planetary shaft 3 projecting from the chain cover 53.

At the left side of the bicycle, a tubular member 48 for mounting a fixed sprocket 4 to the crank shaft 1 is fixed to a bearing 42 in condition of being fitted thereon. The construction of a crank shaft 2 at the left side of the bicycle is the same as that at the right side.

The crank mechanism of the invention of the above-mentioned construction is applicable to the conventional bicycle only by altering it a little. The lid plate 47 mounted to the chain cover 45 can simply be produced by using a cover lid for the chain cover at the conventional bicycle and by welding the tubular member 48 to the cover lid. Parts of the bicycle before altered are directly used for the arm 7, pedal shafts 8 and pedals 9, especially the crank arm at the conventional bicycle not yet altered can directly be used for the arm 7.

The crank of the bicycle is exemplified in the above description, and for the combustion engine the pedal 9 need only be replaced by a connecting rod of the engine. Although the bicycle is driven by a uniform driving force, the well-known combustion engine is ignited in the vicinity of the dead point and a piston is subjected to the force near $\cos \pi/2$ of the most inefficient point and when gas pressure is the strongest, resulting in that the pistons sequentially lower to reduce pressure. Taking this matter into consideration, the present invention can transfer the torque component FL as torque to the crank at the upper dead point where the gas pressure is the strongest, thereby expecting the effect more than the bicycle.

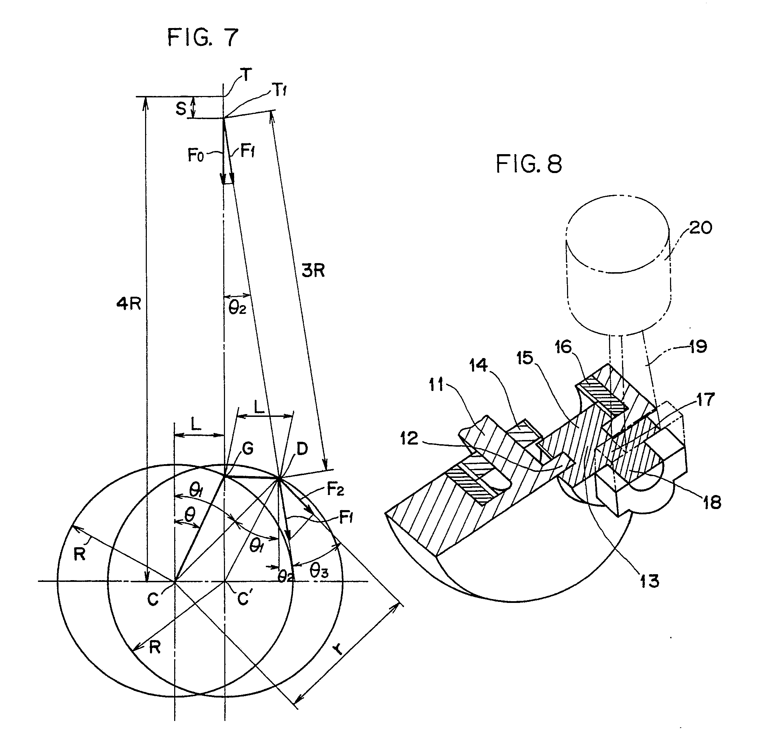

Next, the crank mechanism of the invention applied to the combustion engine will be described in detail. In Fig. 7, reference letter C designates a crank shaft, G designaltes a planetary shaft, D designates a cramp pins, C' designates an apparent revolving axis of D, CG designates a crank arm of length R, GD designates an arm moving in parallel and of length L, CD designates an apparent arm of length r, T designates the upper limit position of piston, $T_1 D$ designates a connecting rod of a temporary length 3R, TC' designates the axis of cylinder of a temporary length 4R, $F_0$ designates a force for pushing the piston toward TC' at the position of $T_1$, $F_1$ designates a force to push the connecting rod (component of force $F_0$). $F_2$ designates a force to allow CD to rotate (component of force $F_1$). $\theta$ designates an angle between a line parallel to the cylinder axis passing C and the crank arm at an optional position, $\theta_1$ designates an angle between a line parallel to the cylinder axis passing C and the apparent arm (of length r) at an optional position, $\theta_2$ designates an angle between the cylinder axis and the piston rod, $\theta_3$ designates an angle between a line perpendicular to CD and the axis of piston rod, and M designates a torque intended to rotate CD by the force $F_0$ when at the optional angle $\theta$. Accordingly, the following expressions are given:

$$M = r \times F_2 \quad (2)$$

4

$r = \sqrt{(R\cos\theta)^2 + (L + R\sin\theta)^2}$    (3)

$F_2 = F_1 \cos\theta_3$

$= F_0 \cdot \cos\theta_3 / \cos\theta_2$    (4)

When pressure in the cylinder is represented by P and volume of cylinder formed by the piston is represented by V, from the expression of adiabatic expansion

$PV^\gamma = C$

Adiabatic exponent $\gamma$ during the explosion stroke = 1.4 are given. Hence,

$PV^{1.4} = C$

Adiabatic exponent $\gamma$ during the compression stroke = 1.38 Hence,

$PV^{1.38} = C$

Now, when an initial volume of combustion chamber is represented by Vo, a cross-sectional area by a, and a compression ratio by 8, the following expression is given:

$(V_1 + V_0)/V_0 = 8/1$

Accordingly, $V_0 = V_1/7$ is obtained.

From $V_1 = 2Ra$, $V_0 = 2Ra/7 = 0.3R \cdot a$ is obtained.

When a volume by movement of piston at the position of stroke S is represented by Vs,

$Vs = (4R - 3R\cos\theta_2 - R\cos\theta) \cdot a$

is given. Hence, at this time, the volume V of combustion chamber is given in the following expression:

$V = V_0 + Vs$

$= (4.3 - 3\cos\theta_2 - \cos\theta)R \cdot a$    (5)

From conditions of pressure and volume when ignited,

$C = P \times (0.3R \cdot a)^\gamma$    (6)

is given.

Assuming $Po = aP$, from $PV^\gamma = C$,

$F_0 = aC/V^\gamma$    (7)

is obtained.

Hence, from the expressions (5), (6) and (7), the following equation is given:

$F_0 = a \times p \times (0 3)^\gamma / (4.3 - 3\cos\theta_2 - \cos\theta)^\gamma$    (8)

Also, from $R\sin\theta = 3R\sin\theta$

$\sin\theta_2 = (\sin\theta)/3$

is obtained.

Accordingly, the following expression is given:

$\theta_2 = \sin^{-1}\{(\sin\theta)/3\}$    (9)

Hence, from the expression (9),

$\cos\theta_2 = \cos \cdot \sin^{-1}(\sin\theta/3)$    (10)

is obtained.

Also, from $r\cos\theta_1 = R\cos\theta$,

$\theta_1 = \cos^{-1}(R\cos\theta/r)$    (11)

is obtained.

From $\theta_3 = 90° - (\theta_1 + \theta_2)$.

$\cos\theta_3 = \sin(\theta_1 + \theta_2)$    (12)

is obtained.

Hence, from the expressions (9), (11) and (12), the following expression is given:

$\cos\theta_3 = \sin\{\cos^{-1}(R\cos\theta/r) + \sin^{-1}[(\sin\theta)/3]$    (13)

Hence, from the expressions (2), (3), (4), (10) and (13), the followoing expression is obtained:

$$M = \frac{\sqrt{(R\cos\theta)^2 + (L + R\sin\theta)^2} \cdot a \times P \times (0.3)^\gamma}{(4.3 - 3\cos\theta_2 - \cos\theta)^\gamma}$$

$$\times \frac{\sin\{\cos^{-1}(R\cos\theta/r) + \sin^{-1}[(\sin\theta)/3]\}}{\cos \cdot \sin^{-1}[(\sin\theta)/3]} \quad \cdots\cdots(14)$$

Incidentally, in order to totalize values of M when a value of $\theta$ is changed to 0 through 180° and compare the total with a difference from the well-known example, a is eliminated from computation and treated as 1.

In order to compare the arm $+L$ with that $-L$ so as to understand the meaning thereof, lengths of the arms are represented by +1 and -1, length of crank arm is 5, and the adiabatic exponent and cross-sectional area of cylinder are 1 respectively, so that when M from 0 to 180° is computed by use of the expression (14) and totalized, the following table 1 is given. In other words, at the explosion stroke of (+), a torque of 259.4 is obtained, and at that of (-) a torque of 142.7 is enough.

Namely, torque consumption is large in the explosion stroke of (+) and smaller enough in the compression stroke of (-). Such tendency will largely appear as the arm L is larger in length (refer to Table 2). However, the conventional example, which has no arm L, is not given such benefits by the mechanism. At Table 2, various values are substituted into L, other items are represented by moderate numerals, and a value of M is computed at every 1° in θ of 0 to 180° and totalized, so that the well-known techique is deemed 100% and others are compared by percentage thereof. An remarkable improvement is seen in the balance of effective moment of subtracting the moment of compression stroke from that of explosion stroke, and in the initial moment at 1°.

TABLE-1

| Comparison of characteristic by Arm | | | |
|---|---|---|---|
| Sorting | | Well-known Technique | Present Invention |
| Length of Crank Arm | R | 5 | 5 |
| Length of Arm | L | 0 | +1 | -1 |
| Pressure in Combustion Chamber | P | 1 | 1 | 1 |
| Adiabatic Exponent | $\gamma$ | 1 | 1 | 1 |
| Sectional Area of Cylinder | a | 1 | 1 | 1 |
| Total of Moment of 0 to 180° | $\Sigma$ M | 193.8 | 259.4 | 142.7 |
| Balance of Effective Moment | | 0 | 116.7 | |

TABLE-2

| Sorting | | Well-known Technique | | Present Invention | | | | | | | |
|---|---|---|---|---|---|---|---|---|---|---|---|
| Length of Crank Arm | R | 5 | | 5 | | 5 | | 5 | | 5 | |
| Arm/Crank Arm | L/R | 0 | | 0.1 | | 0.2 | | 0.3 | | 0.4 | |
| Length of Arm | L | 0 | | +0.5 | −0.5 | +1 | −1 | +1.5 | −1.5 | +2 | −2 |
| Stroke | | Explo-sion | Compres-sion | Explo-sion | Compres-sion | Explo-sion | Compres-sion | Explo-sion | Compres-sion | Explo-sion | Compres-sion |
| Pressure of Combustion Chamber | P | 50 | 8 | 50 | 8 | 50 | 8 | 50 | 8 | 50 | 8 |
| Adiabatic Exponent | $\gamma$ | 1.4 | 1.36 | 1.4 | 1.36 | 1.4 | 1.36 | 1.4 | 1.36 | 1.4 | 1.36 |
| Sectional Area of Cylinder | a | 1 | 1 | 1 | 1 | 1 | 1 | 1 | 1 | 1 | 1 |
| Total of 1 to 180 ° Moment | $\Sigma M$ | 6874.3 | 1117.6 | 8123.4 | 944.3 | 9372.5 | 819.0 | 10621.6 | 739.8 | 11870.7 | 703.5 |
| Balance of Effective Moment | Balance | 5756.7 | | 7179.1 | | 8553.5 | | 9881.8 | | 11167.2 | |
| Ratio of Assuming the Conventional as 100% | % | 100 | | 124.7 | | 148.6 | | 171.7 | | 193.9 | |
| Moment at 0 ° | $M_0$ | 0.0 | | 24.9 | | 49.9 | | 74.8 | | 99.8 | |
| Moment at 1 ° | $M_1$ | 5.8 | | 30.7 | | 55.7 | | 80.6 | | 105.5 | |
| Ratio when the Prior Art is assumed as 100% | % | 100 | | 529 | | 960 | | 1390 | | 1819 | |

EP 0 386 847 A2

Next, an example of stucture of the crank mechanism for the combustion engine will be described in accordance with Fig. 8, which is a partially cutaway perspective view showing the state where the force F is applied in the 1st quadrant. The Fig. 8 example is different from the Fig. 2B in that an arm 17 moving while keeping its parallel posture, for example, horizontal posture, need only be very small in length in the viewpoint of property of the combustion engine and that the mechanism moving keeping the horizontal posture comprises two gears and an internal gear engageable therewith.

In Fig. 8, reference numeral 11 designates a rotatable crank shaft (corresponding to C in Fig. 7), 12 designates a crank arm (corresponding to CG in Fig. 7) perpendicularly fixed to the crank shaft 11 and box-like-shaped to serve also as a flywheel, 13 designates a planetary shaft (corresponding to G in Fig. 7) rotatably supported to the crank arm 12 so as to be parallel to the crank shaft 11, 14 designates a fixed gear which is fixed to the combustion engine body so as to rotatably coaxially support the crank shaft 11, and 15 designates a rotary gear coaxially fixed to the planetary shaft 13 and formed like the fixed gear. The fixed gear 14 and rotary gear 15 engage with an internal gear 16 disposed in a box-like member constituting the crank arm 12. In a case where friction against the internal gear 16 is required to be reduced, a needle bearing may be used between the internal gear 16 and the box-like member. Reference numeral 17 designates an arm perpendicularly fixed to the planetary shaft 3, which, even when rotating in association with the crank arm 12, is adapted to keep its parallel posture, for example, the horizontal posture, and 18 designates a crank pin, which is fixed to the arm 17, shifted from the planetary shaft 13 and extending in parallel thereto, and pivoted to a connecting rod 19.

Such operation based on the above-mentioned construction is the same as that for the aforesaid bicycle, which is omitted of detailed description.

From Tables 1 and 2, it is preferable that the arm 17 moving in parallel is as large in length as possible for improving its performance. Also, in comparison with the length of arm 17, the gear 15 is desired to make its diameter as large as possible to reduce a force applied to teeth thereof. The diameter of gear 15, however, cannot be too long, but the gear 15 must be as compact as possible. Accordingly, it is preferable that the gear is improved in material, a helical gear rather than a spur gear is used, tooth width is broadened, the gears are disposed in parallel as shown in Fig. 8, or a spiral bevel gear is used.

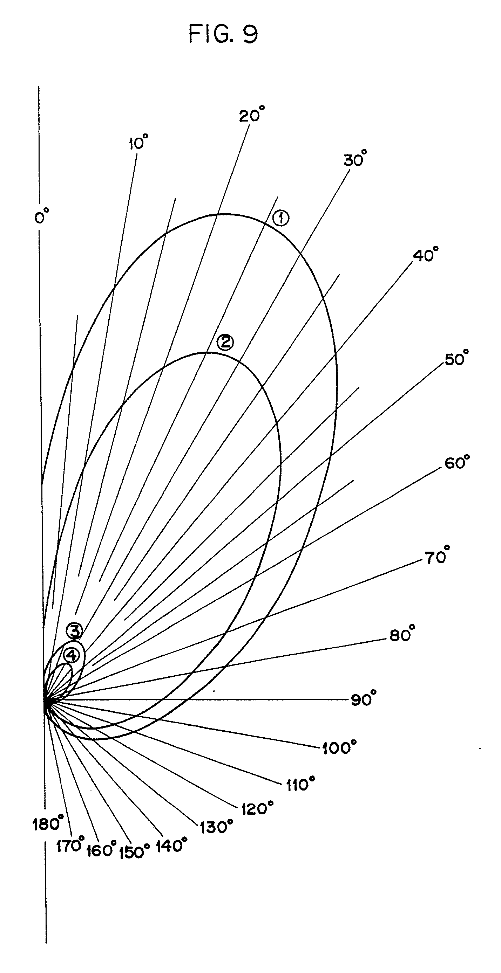

In Fig. 9 of a torque diagram by polar coordinates depicted from Table 2, reference numeral ① designates a torque curve on the basis of the present embodiment, showing a mode in the explosion stroke assuming $R = 5$, $L = +1$, $P = 50$, $\gamma = 1.4$ and $a = 1$, and ④ designates a torque curve on the basis of the present invention during the compression stroke when $R = 5$, $L = +1$, $P = 50$, $\gamma = 1.4$ and $a = 1$ are adopted. An area enclosed by each torque curve indicates expansion work or compression work, and a difference between the areas ④ and ① is an effective torque obtained by this embodiment. ② and ③ designate torque curves of the prior art, ② showing the explosion stroke and ③ compression stroke, whereby it is seen that the embodiment can obtain torque larger than the conventional one.

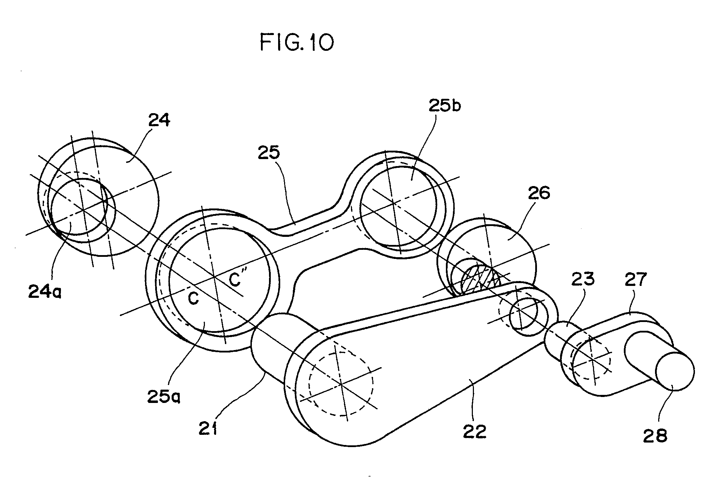

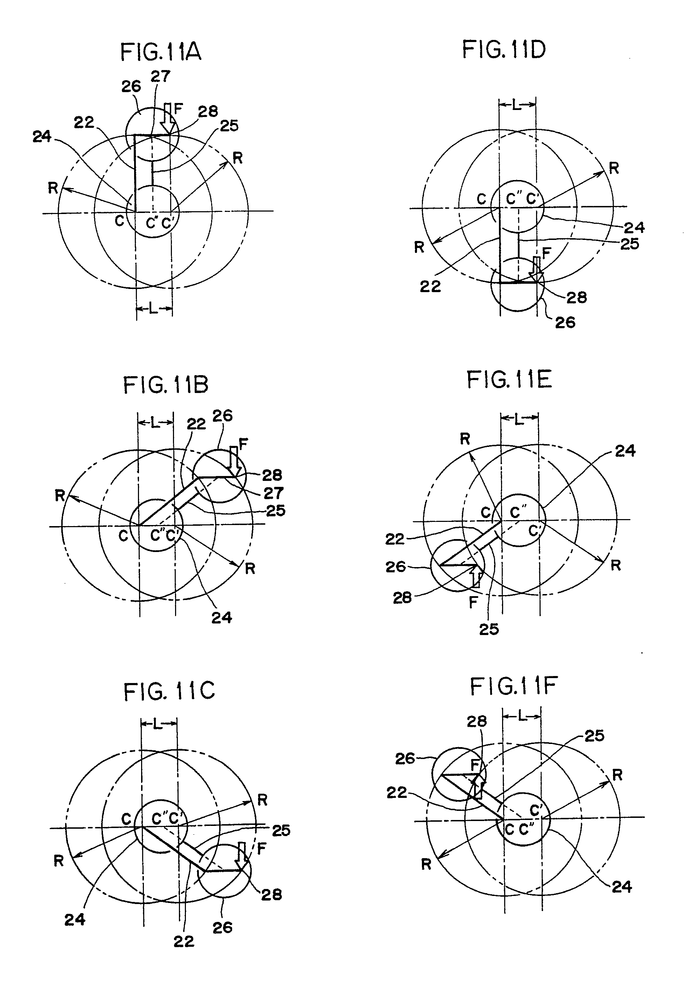

Next, explanation will be given on an embodiment, in which a mechanism for maintaining the parallel posture of the arm is constituted of a linkage mechanism, in accordance with illustrations of movement in Figs. 10 and 11A through 11F, the Fig. 10 being a perspective view, in which the crank arm reaches an intermediate horizontal position of Figs. 11B and 11C and the arm is positioned in the extension line of the crank arm.

In Fig. 10, reference numeral 21 designates a crank shaft, 22 designates a crank arm perpendicularly fixed to the crank shaft 21, 23 designates a planetary shaft supported to the utmost end of the crank arm 22 in relation of being parallel to the crank shaft 21 and rotatable, 24 designates a disc-like fixed eccentric cam of, for example, disc-like shape, perpendicularly supported to the crank shaft 21, the crank shaft 21 being rotatably fitted in a bore 24a provided at an eccentric position (in Fig. 10, the position horizontally shifted from the center of the cam 24), 25 designates a link arm disposed in parallel to the crank arm 22 and a bore 25a provided at one end of the link arm 25 is rotatably fitted onto the fixed eccentric cam 24, 26 designates, for example, a disc-like rotary eccentric cam which is perpendicularly fixed to the planetary shaft 23 at the eccentric position (in Fig. 10, the position horizontally shifted as the same as the fixed eccentric cam 24) and a bore 25b provided at the other end of link arm 25 is rotatably fitted onto the rotary eccentric cam 26, 27 designates an arm perpendicularly fixed to the planetary shaft 23 so that, even when rotating in association with the crank arm 22, the linkage mechanism of the crank arm 22 and link arm 25 maintains the posture, for example, the horizontal posture of the arm 27, and 28 designates a pedal shaft or a crank pin, to which a pedal or a piston rod is pivoted.

Next, explanation will be given on operation of the above-mentioned construction in accordance with Figs. 11A through 11F, in which the crank arm 22 is positioned at the upper dead point, the first quadrant, the second quadrant, the lower dead point, the third quadrant and the fourth quadrant, C designates the axis of crank shaft 21, C″ designates the revolving axis of the link arm 25 by the fixed eccentric cam 24, and C′ designates an apparent revolving axis of the pedal shaft or the crank pin 28 at the utmost end of the arm 27.

In Figs. 11A through 11F, the arm 27 is set to the horizontal posture. Now, when the pedal shaft or the crank pin is depressed downwardly, the crank arm 22 and link arm 25 rotate around C and C″ respectively and keeping parallel to each other, the arm 27 moves downwardly keeping its horizontal posture, and the crank arm 22 is pushed by the planetary shaft 23 to rotate around the crank shaft 21.

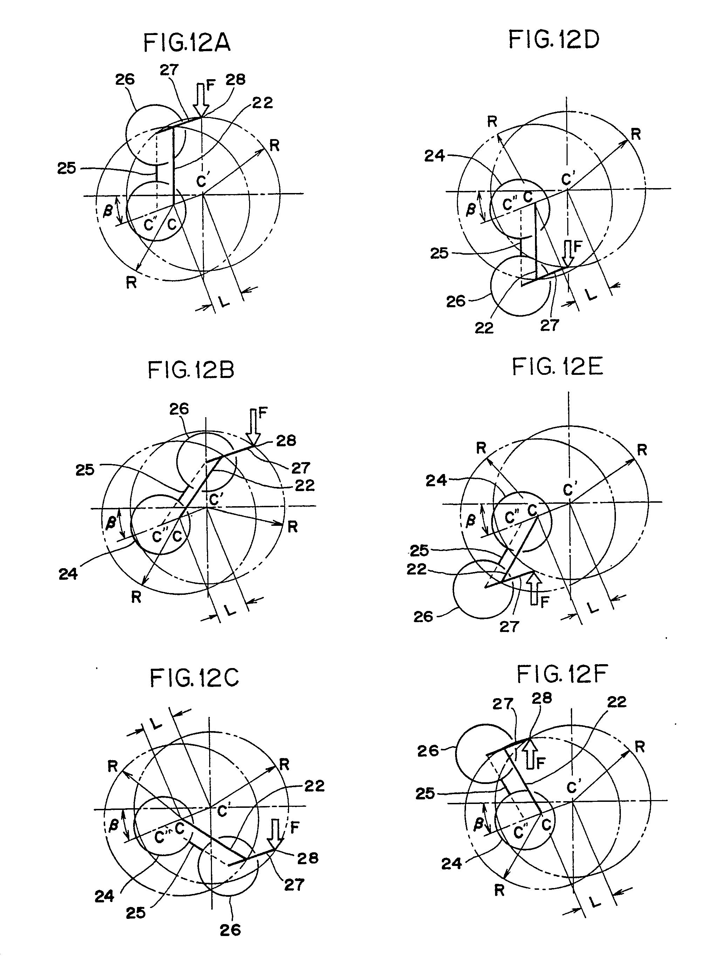

Figs. 12A through 12F show the linkage mechanism in which the arm 27 is set slightly upwardly only at an angle $\beta$ from the horizontal posture and moves in parallel while keeping such posture. In Figs. 12A through 12F, the crank arm 22, as the same as in Figs. 11A through 11F, is positioned at the upper dead, the first quadrant, the second quadrant, the lower dead point, the third quadrant and the fourth quadrant, and C′ designates an apparent revolving axis of the pedal shaft or the crank pin 28 at the utmost end of arm 27. Herein, the fixed eccentric cam 24 is fixed to the crank mechanism body in such a manner that the axis C of crank shaft 21 is not shifted horizontally with respect to the revolving axis C″ of link arm 25 as shown in Figs. 11A through 11F, but shifted at the angle $\beta$, in which a larger effective torque than that in Figs. 11A through 11F is obtained, at which time quantity of angle $\beta$ depends on length R of crank arm 22 and that L of arm 27.

Also, the configuration of cams 24 and 26 and the bores 25a and 25b at the link arm 25 fitted onto the cams 24 and 26 can alter the posture of arm 27 in a slight range.

The above-mentioned embodiments of the invention can obtain the following effects.

(A) When the present invention is applied to the bicycle, the effect are as follows:

1) Since a radius of rotation of the pedal is equal to that of the conventional bicycle, input condition is the same.

2) When an arm of $L = 2R/\pi = 0.64R$ is provided with respect to the same input, it is seen from the expression (1) that the present invention has two times larger torque. Accordingly, when the bicycle is driven in a speed change gear, the two times high speed is obtained.

3) Torque as well as total torque, even when compared at any angle, is large, thereby enabling the bicycle to be driven in a light feeling.

4) The crank has no upper dead point and lower dead point, whereby the bicycle, when running on an upward slope, runs at not slow speed and avoids shaking.

(B) When applied to the combustion engine, the effects are as follows:

1) In the explosion stroke, since the arm becomes plus, that is, longer, with respect to the crank arm, absorption of torque is plus. In the compression stroke, since the arm is minus, that is, shorter, with respect to the same, a stronger force than the conventional one is generated, whereby torque consumption at the compression stroke is enough to be reduced, which is convenient for both the explosion and compression strokes in this case.

2) When torque of the corventional crank with no arc is assumed to be 100% and compared with that having arms of 0.1R and 0.2R in length with respect to length R of crank arm, in Table 2, torque, when an initial angle is 1°, is 529% and 960%. A difference therebetween means that a force applied as a load on the crank pin under the maximum pressure is applied to the rotation. Accordingly, in consideration of pressure, the force applied to the crank pin and crank arm is reduced to that extent, thereby enabling them to be compact in design.

3) Similarly, the total torque is 124.7% and 148.6%, which is so simply considered that, for a car, an equal amount of gasoline can 1.25 and 1.5 times extend a driving distance.

4) Large torque means easy rotation and the number of rotations increases, which also is effective for an ontput rise other than the torque.

5) For the reference, as seen from Table 2, an arm of 0.4R in length is required to double the total torque.

(C) For a steam engine, when, in the expression (14), $(0.3)^\gamma /(4.3 - 3 \cos \theta_2 - \cos \theta)$ $\gamma = 1$ is subtitutied into M, the following Table 3 is obtained.

1) In this case, when an arm of 0.628R in length is provided with respect to the same input, a double output is obtained in comparison with the prior art as shown in Table 3.

2) Moment at the initial angle of 1° is 33.00 times larger as compared with the conventional one, whereby there is no fear of the dead point.

Table 3

| Characteristic Comparison for Steam Engine | | | |
|---|---|---|---|
| Sorting | | Prior Art | Present Invention |
| Length of Crank Arm | R | 5 | 5 |
| Arm/Crank Arm | L/R | 0 | 0.628 |
| Length of Arm | L | 0 | 3.14 |
| Pressure | P | 1 | 1 |
| Sectional Area of Cylinder | a | 1 | 1 |
| Moment at 1 ° | $M_1$ | 0.1 | 3.3 |
| Ratio Assuming 100% Conventional | % | 100 | 3300 |
| Total of Moment at 0 through 180 ° | $\Sigma M$ | 572.9 | 1141.3 |
| Ratio Assuming 100% of Prior Art | % | 100 | 199 |

(D) For Compressor Pump

When the case of -L is utilized from description of Item 1) at the combustion engine and Table 1, at the same stroke, small torque will generate a large force, thereby obtaining energy saving in a compressor or a pump.

Furthermore, the present invention, when applied to other examples, such as 1) a three-wheel bicycle seen in Southeast Asia, 2) a pedalling water boat for leisure, and 3) an input airplane, can expect an inprovement in performance of the present invention.

**Claims**

1. A crank mechanism having
a main body,
a crank shaft rotatably supported to said body,
a crank arm rotatable around and integrally with said crank shaft,
a planetary shaft perpendicularly supported to the utmost end of said crank arm and rotatably thereto,
an arm perpendicularly fixed to said planetary shaft, and means for moving in parallel said arm rotating together with said crank shaft when the utmost end of said arm is subjected to a force.

2. A crank mechanism as set forth in claim 1, wherein said means for moving in parallel said arm, having
a fixed sprocket disposed coaxially with said crank shaft and fixed to said main body,
a rotary sprocket fixed to said planetary shaft and of the same configration as said fixed sprocket, and
an endless member stretched across both said sprockets.

3. A crank mechanism as set forth in claim 2 which is applied to a bicycle, wherein said bicycle has a chain for transmitting rotation of said crank shaft to a rear wheel of said bicycle and a chain cover for said chain, said fixed sprocket being mounted on said chain cover.

4. A crank mechanism as set forth in claim 3, wherein said chain cover has a mounting seat for a cover lid essentially provided corresponding to a sprocket of the bicycle, said fixed sprocket being fixed to a lid plate mounted to said mounted seat.

5. A crank mechanism as set forth in claim 2, which has cover means for covering said endless member.

6. A crank mechanism as set forth in claim 2 which is applied to a bicycle, wherein said bicycle has a bearing for supporting said crank shaft, said fixed sprocket being mounted to a cyclindrical member fixedly fitted onto said bearing.

7. A crank mechanism as set forth in claim 1, wherein said means for moving in parallel said arm has
a fixed gear disposed coaxially with said crank shaft and fixed to said main body,

a fixed gear fixed to said planetary shaft and of the same configuration as said fixed gear, and
a third gear engageable with both said gears.

8. A crank mechanism as set forth in claim 7, wherein said fixed gear and rotary gear are external gears respectively and said third gear is an internal gear.

9. A crank mechanism as set forth in claim 8, wherein said crank arm is box-like-shaped and serves also as a flywheel, said third gear being disposed within said crank arm.

10. A crank mechanism as set forth in claim 8, wherein said fixed gear and rotary gear are disposed in parallel to each other and axially shifted from each other.

11. A crank mechanism as set forth in claim 1, wherein said means for moving in parallel said arm has a fixed eccentric cam fixed to said main body and rotatably supporting said crank shaft at the eccentric position,
a rotary eccentric cam for fixing said planetary shaft at the eccetric position, and
a link arm disposed in parallel to said crank arm and
contacting at one end and the other end with said eccentric cams respectively.

12. A crank mechanism as set forth in claim 11, wherein said link arm is disposed perpendicularly to the direction of a force applied to the utmost end of said link arm.

13. A crank mechanism as set forth in claim 11, wherein said link arm is disposed at an angle with respect to the perpendicular direction to the direction of said force applied to the utmost end of said link arm.

FIG.1A
PRIOR ART

FIG.1B
PRIOR ART

FIG.1C
PRIOR ART

FIG.1D
PRIOR ART

FIG.2A

FIG.2B

FIG.2C

FIG.2D

FIG. 3

FIG. 4

# FIG. 5

EP 0 386 847 A2

FIG. 6

EP 0 386 847 A2

FIG. 7

FIG. 8

FIG. 9

## FIG. 10

FIG.11A

FIG.11D

FIG.11B

FIG.11E

FIG.11C

FIG.11F

FIG.12A

FIG.12D

FIG.12B

FIG.12E

FIG.12C

FIG.12F